# EUROPEAN PATENT APPLICATION

(11) **EP 4 550 033 A1**
(43) Date of publication of application: **07.05.2025**
(21) Application number: 23208022.6
(22) Date of filing: 06.11.2023
(51) Int. Cl.: G02C 7/02

(54) **SPECTACLE LENS COMPRISING RING-SHAPED STRUCTURES AND METHOD**

(71) Applicant: Carl Zeiss Vision International GmbH, 73430 Aalen (DE)
(72) Inventor: Sankaridurg, Padmaja Rajagopal, Maroubra, 2035 (AU)
(74) Representative: Carl Zeiss AG - Patentabteilung

(57) **Abstract**

The present invention relates to a spectacle lens comprising a plurality of ring-shaped structures, each ring-shaped structure having a uniform width, one ring-shaped structure or more ring-shaped structures of said plurality of ring-shaped structures each having a varying power, the spectacle lens being characterized in that a variation of a surface mean power comprises one random component or more random components, said variation being along a ring-shaped path within said one ring-shaped structure or along a ring-shaped path within a same ring-shaped structure of each of said more ring-shaped structures.

## Description

### Field of the invention

The invention relates to a spectacle lens comprising a plurality of ring-shaped structures according to the preamble of claim 1 and to a method for calculating a digital twin of a spectacle lens according to the preamble of claim 11.

### Related prior art

PCT/CN2023/076348 discloses a spectacle lens comprising a central zone, one ring-shaped structure or more ring-shaped structures each of uniform width. The spectacle lens comprises instead of or additional to said one ring-shaped structure or said more ring-shaped structures one ring-shaped structure or more ring-shaped structure each having a variable surface power. Thus, one ring-shaped structure or more ring-shaped structures is/are having a varying power.

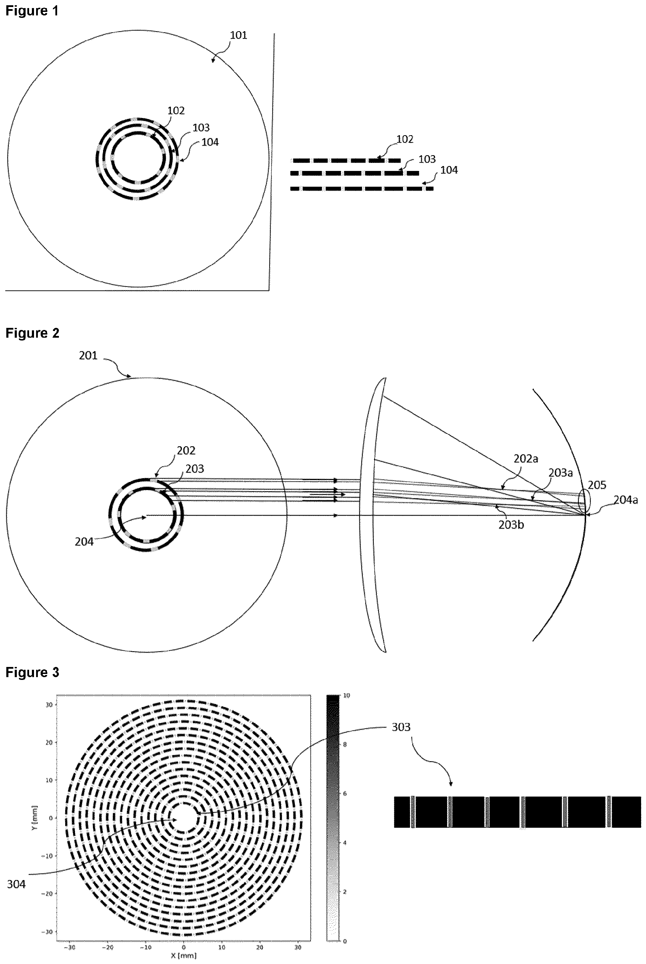

WO 2023/275189 A1 discloses in paragraph [00141] with respect to figure 3 that the optical power of optical elements 14 in the left quadrant Q3 and/or the lower quadrant Q4 may be higher than the optical power of the optical elements in the right quadrant Q1 and/or the upper quadrant Q2. The mean optical power of the optical elements in the left quadrant Q3 and/or the lower quadrant Q4 may be higher than the mean optical power of the optical elements in the right quadrant Q1 and/or the upper quadrant Q2. WO 2023/275189 A1 discloses in paragraph [00145] that the optical elements 14 may be configured so that along at least one section of the lens element, the mean sphere of the optical elements varies, increases or decreases, from a point of said section towards the peripheral part of said section. Three of the optical elements of figure 3 have a varying power.

### Problem to be solved

Departing from PCT/CN2023/076348 describing a spectacle lens comprising one ring-shaped structure or more ring-shaped structures each having a variable surface power, the problem to be solved by the invention is to provide a spectacle lens intended to minimize an adaptation or a habituation effect for a spectacle lens wearer.

### Summary of the invention

The problem has been solved by the spectacle lens according to claim 1, the method according to claim 11.

The spectacle lens comprises a plurality of ring-shaped structures, each ring-shaped structure has a uniform width, one ring-shaped structure has a varying surface power or more ring-shaped structures of said plurality of ring-shaped structures have a varying power, the spectacle lens is characterized in that a variation of a surface mean power comprises one random component or more random components, said variation being along a ring-shaped path within said one ring-shaped structure or along a ring-shaped path within a same ring-shaped structure of each of said more ring-shaped structures.

A "spectacle lens" is as defined in ISO 13666:2019(E), entry 3.5.2, as an ophthalmic lens (3.5.1) worn in front of, but not in contact with, an eyeball. The spectacle lens preferably is a finished spectacle lens, the finished spectacle lens as defined in ISO 13666:2019(E), entry 3.8.7, as spectacle lens (3.5.2) of which both sides have their final optical surface. As in note 1 to entry 3.8.7 of ISO 13666:2019(E), the finished spectacle lens can be either edged (cut) or uncut. The spectacle lens preferably is selected from one of the group consisting of
- a single-vision spectacle lens as defined in ISO 13666:2019(E), entry 3.7.1
- a position-specific single-vision spectacle lens as defined in ISO 13666:2019(E), entry 3.7.2
- a power-variation spectacle lens as defined in ISO 13666:2019(E), entry 3.7.7
- a progressive-power spectacle lens as defined in ISO 13666:2019(E), entry 3.7.8.

A "plurality of ring-shaped structures" comprises more than one ring-shaped structure.

A "structure" is a domain of the spectacle lens having a surface power different to a surface power of a surface of the spectacle lens comprising said structure outside the domain occupied by any structure. The surface power of the structure is defined analogously as in ISO 13666:2019(E), entry 3.10.4, as a local ability of a surface of the structure to change a vergence of a bundle of rays incident at said surface in any position of said surface. As in note 1 to entry 3.10.4 of ISO 13666:2019(E), the surface power of the structure is determined from a radius or radii of the surface of the structure and a refractive index (3.1.5) of a material of the structure, and is calculated for light (3.1.2) incident or emergent in air.

The surface power of the surface of the spectacle lens is defined analogously as in ISO 13666:2019(E), entry 3.10.4, as a local ability of the surface of the spectacle lens to change a vergence of a bundle of rays at the surface in any position of said surface, i.e., as the local ability of a front surface of the spectacle lens to change the vergence of the bundle of rays at the front surface in any position of said front surface or as the local ability of a back surface of the spectacle lens to change the vergence of the bundle of rays at the back surface in any position of said back surface. Analogously as in note 1 to entry 3.10.4 of ISO 13666:2019(E), the surface power of a respective surface of the spectacle lens is determined (i) from a radius or radii of the front surface and a refractive index (3.1.5) of the optical material (3.3.1) of the spectacle lens, and is calculated for light (3.1.2) incident or emergent in air or (ii) from a radius or radii of the back surface and a refractive index (3.1.5) of the optical material (3.3.1) of the spectacle lens, and is calculated for light (3.1.2) incident or emergent in air.

The surface of the spectacle lens preferably is either the front surface as defined in ISO 13666:2019(E), entry 3.2.13, or the back surface as defined in ISO 13666:2019(E), entry 3.2.14. At least one of the front surface and the back surface of the spectacle lens may be formed as one of the following surfaces:
- a spherical surface as defined in ISO 13666:2019(E), entry 3.4.1,
- a cylindrical surface as defined in ISO 13666:2019(E), entry 3.4.2,
- an aspherical surface as defined in ISO 13666:2019(E), entry 3.4.3,
- a toroidal surface as defined in ISO 13666:2019(E), entry 3.4.6,
- an atoroidal surface as defined in ISO 13666:2019(E), entry 3.4.7,
- a power-variation surface as defined in ISO 13666:2019(E), entry 3.4.10.

Each structure of a plurality of structures is "ring-shaped" if a same structure of said plurality of structures, said same structure considered separately from each other structure of said plurality of structures, has a path within said same structure that surrounds a structure-free domain of said same structure from a point within said same structure and ends in said point again. Each ring-shaped structure of the plurality of ring-shaped structures, a same ring-shaped structure considered separately from each other ring-shaped structure of said plurality of ring-shaped structures, may be a circular, an elliptical, an irregular oval, an annular shaped element or any other ring encircling or surrounding the structure-free domain of said ring-shaped structure, and being encircled or surrounded by a structure-free domain of the spectacle lens. Each ring-shaped structure of the plurality of ring-shaped structures, a same ring-shaped structure considered separately from each other ring-shaped structure of said plurality of ring-shaped structures, may be of a same ring-shape, for example circular. Alternatively, at least one ring-shaped structure of the plurality of ring-shaped structures, again a same ring-shaped structure considered separately from each other ring-shaped structure of said plurality of ring-shaped structures, may be of a different ring-shape, for example elliptical, as other ring-shaped structures of said plurality of ring-shaped structures, for example circular ones. Alternatively, each ring-shaped structure of the plurality of ring-shaped structures, again a same ring-shaped structure considered separately from each other ring-shaped structure of said plurality of ring-shaped structures, may be of a different ring-shape.

Each ring-shaped structure of said plurality of ring-shaped structures, a same ring-shaped structure considered separately from each other ring-shaped structure of said plurality of ring-shaped structures, is limited by two onset lines, an outer onset line passing along each outer onset of said same ring-shaped structure and an inner onset line passing along each inner onset of said same ring-shaped structure. An outer onset represents, along an outer circumference or along an outer perimeter of said same ring-shaped structure, a first outer position in which a surface of said same ring-shaped structure deviates from the surface of the spectacle lens comprising said same ring-shaped structure. An inner onset represents, along an inner circumference or an inner perimeter, a first inner position in which a surface of said same ring-shaped structure deviates from the surface of the spectacle lens comprising said same ring-shaped structure. In other words, again said same ring-shaped structure considered separately from each other ring-shaped structure of said plurality of ring-shaped structures, said same ring-shaped structure surrounds or encircles a structure-free domain of the surface of the spectacle lens comprising said same ring-shaped structure and said same ring-shaped structure is surrounded or encircled by a structure-free domain of said surface.

A "structure-free domain of a same ring-shaped structure" is a domain of the spectacle lens or of the spectacle lens surface outside a respective domain occupied by each ring-shaped structure of said plurality of ring-shaped structures encircled or surrounded by said same ring-shaped structure.

A "structure-free domain of the spectacle lens" is a domain of the spectacle lens or of the spectacle lens surface outside a respective domain occupied by each ring-shaped structure of said plurality of ring-shaped structures.

Each ring-shaped structure of said plurality of ring-shaped structures encircles or surrounds one common point of the spectacle lens, said common point being either an optical centre or a fitting point of the spectacle lens or any other predetermined point, the optical centre as defined in ISO 13666:2019(E), entry 3.2.15, the fitting point as defined in ISO 13666:2019(E), entry 3.2.34. As in note 1 to entry 3.2.30 of ISO 13666:2019(E), the optical centre (3.2.15) usually applies to the single vision spectacle lens (3.7.1), the fitting point (3.2.34) usually to the position-specific single-vision spectacle lens (3.7.2) or the power-variation spectacle lens (3.7.7). Each ring-shaped structure of said plurality of ring-shaped structures comprises said one common point of the spectacle lens when a same ring-shaped structure encircles or surrounds said common point.

The structure-free domain of an innermost ring-shaped structure of said plurality of ring-shaped structures comprises said common point preferably in that said innermost ring-shaped structure has a maximum distance between inner onsets of said innermost ring-shaped structure selected from: a maximum distance of 15 mm, a maximum distance of 12 mm, a maximum distance of 9 mm, a maximum distance of 8 mm, a maximum distance of 7 mm, a maximum distance of 6 mm, a maximum distance of 5 mm.

Each ring-shaped structure of said plurality of ring-shaped structures has a surface power different to a surface power of the respective surface of the spectacle lens comprising said plurality of ring-shaped structures outside a respective domain occupied by each ring-shaped structure of said plurality of ring-shaped structures. The surface power of a respective ring-shaped structure of said plurality of ring-shaped structures is defined analogously as in ISO 13666:2019(E), entry 3.10.4, as a local ability of the surface of the respective ring-shaped structure to change a vergence of a bundle of rays incident at said surface in any position of said surface. Analogously as in note 1 to entry 3.10.4 of ISO 13666:2019(E), the surface power of the respective ring-shaped structure is determined from a radius or radii of the surface of the respective ring-shaped structure and a refractive index (3.1.5) of a material of the respective ring-shaped structure, and is calculated for light (3.1.2) incident or emergent in air. The refractive index of the material of each ring-shaped structure preferably is assumed to be a same refractive index as of an optical material of the spectacle lens, the optical material as defined in ISO 13666:2019(E), entry 3.3.1.

The surface of a respective ring-shaped structure of said plurality of ring-shaped structures may be selected from one of the following surfaces or may be pieced together from parts selected from one or more of the following parts:
- one part or more parts of a spherical surface, the spherical surface as defined in ISO 13666:2019(E), entry 3.4.1
- a cylindrical surface as defined in ISO 13666:2019(E), entry 3.4.2
- one part or more parts of a cylindrical surface
- one part or more parts of an aspherical surface, the aspherical surface as defined in ISO 13666:2019(E), entry 3.4.3
- one part or more parts of a toroidal surface, the toroidal surface as defined in ISO 13666:2019(E), entry 3.4.6
- one part or more parts of an atoroidal surface, the atoroidal surface as defined in ISO 13666:2019(E), entry 3.4.7
- a power-variation surface as defined in ISO 13666:2019(E), entry 3.4.10
- one part or more parts of a power-variation surface.

Preferably, the surface of the respective ring-shaped structure of said plurality of ring-shaped structures is (i) cylindrical or (ii) with a variation of surface power over part or all of its area, without discontinuity, or pieced together from at least one of (iii) one part or more parts of the cylindrical surface and (iv) one part or more parts of the power-variation surface.

Each surface of a ring-shaped structure of said plurality of ring-shaped structures may have a same surface, preferably a respective same surface being selected or pieced together from parts of before mentioned surfaces. Alternatively, one surface of said plurality of ring-shaped structures is different to another surface or other surfaces of said plurality of ring-shaped structures, or more surfaces of said plurality of ring-shaped structures are different to other surfaces of said plurality of ring-shaped structures, preferably a respective surface being selected or pieced together from parts of before mentioned surfaces. Alternatively, each surface of said plurality of ring-shaped structures is different, preferably a respective surface being selected or pieced together from parts of before mentioned surfaces.

With respect to the surface of the spectacle lens comprising said plurality of ring-shaped structures outside the respective domain occupied by each ring-shaped structure of said plurality of ring-shaped structures, each ring-shaped structure of said plurality of ring-shaped structures may be elevated or depressed, preferably elevated. Alternatively, with respect to the surface of the spectacle lens comprising said plurality of ring-shaped structures outside the respective domain occupied by each ring-shaped structure of said plurality of ring-shaped structures, one ring-shaped structure or more ring-shaped structures of said plurality of ring-shaped structures may be elevated while another ring-shaped structure or other ring-shaped structures of said plurality of ring-shaped structures may be depressed. Alternatively, with respect to the surface of the spectacle lens comprising said plurality of ring-shaped structures outside the respective domain occupied by each ring-shaped structure of said plurality of ring-shaped structures, one ring-shaped structure or a same ring-shaped structure of said more ring-shaped structures may be elevated and depressed. In this alternative, another ring-shaped structure or other ring-shaped structures of said plurality of ring-shaped structure may be elevated or depressed with respect to the surface of the spectacle lens comprising said other ring-shaped structure or said other ring-shaped structures outside the respective domain occupied by said other ring-shaped structure(s).

A "uniform width" designates a constant distance between onsets of a same ring-shaped structure of said plurality of ring-shaped structures along any direction perpendicular to a circumferential direction of said same ring-shaped structure, said same ring-shaped structure considered separately from each other ring-shaped structure of said plurality of ring-shaped structures. The circumferential direction of a respective same ring-shaped structure of said plurality of ring-shaped structures is defined by a central path between the inner onset line and the outer onset line of the respective same ring-shaped structure. Onsets comprise each inner onset and each outer onset of a respective same ring-shaped structure of said plurality of ring-shaped structures.

Each same ring-shaped structure of said plurality of ring-shaped structures has the constant distance between onsets of each same ring-shaped structure along any direction perpendicular to any circumferential direction of each of said same ring-shaped structures, each of said same ring-shaped structures considered separately from each other ring-shaped structure of said plurality of ring-shaped structures. One ring-shaped structure or more ring-shaped structures of said plurality of ring-shaped structures has/have said uniform width which is constant for said one ring-shaped structure or which is constant for each same ring-shaped structure of said more ring-shaped structures but different to other ring-shaped structures of said plurality of ring-shaped structures. In other words, in said plurality of ring-shaped structures each ring-shaped structure is of uniform width, but the uniform width of different ring-shaped structures may be same or different.

A "surface mean power" is defined analogously as in ISO 13666:2019(E), entry 3.13.12, as focal power (3.10.2) of the surface of one ring-shaped structure of said plurality of ring-shaped structures halfway between two surface-power values in two principal meridians or as focal power (3.10.2) of each surface of more ring-shaped structures of said plurality of ring-shaped structures halfway between two surface power values in two principal meridians. Said two surface power values in said two principal meridians are defined as in ISO 13666:2019(E), entry 3.10.4. The two principal meridians in any position of the/each surface are defined analogously as in ISO 13666:2019(E), entry 3.4.5, as meridians with maximum and minimum curvatures in a same position.

A "ring-shaped path within one ring-shaped structure" is a path within said one ring-shaped structure which surrounds the structure-free domain of said same one ring-shaped structure from a point within said same one ring-shaped structure and ends in said point again, said one ring-shaped structure considered separately from each other ring-shaped structure of said plurality of ring-shaped structures. Preferably, the ring-shaped path is along a circumferential direction of said one ring-shaped structure. The circumferential direction of said one ring-shaped structure is defined by a central path between the inner onset line and the outer onset line of said one ring-shaped structure.

A "ring-shaped path within a same ring-shaped structure of each of more ring-shaped structures" is a path within said same ring-shaped structure which surrounds the structure-free domain of said same ring-shaped structure from a point within said same ring-shaped structure and ends in said point again, said same ring-shaped structure considered separately from each other structure of said more ring-shaped structures and said plurality of ring-shaped structures. Preferably, the ring-shaped path within said same ring-shaped structure of each of said more ring-shaped structures is along a circumferential direction of said same ring-shaped structure. The circumferential direction of said same ring-shaped structure of said more of ring-shaped structures is defined by a central path between the inner onset line and the outer onset line of said same ring-shaped structure.

A "variation in surface mean power" is defined
- with respect to one ring-shaped structure as non-uniform surface mean power of said one ring-shaped structure along the ring-shaped path within said same one ring-shaped structure, said one ring-shaped structure considered separately from each other ring-shaped structure of said plurality of ring-shaped structures,
- with respect to more ring-shaped structures as non-uniform surface mean power of a same ring-shaped structure of each of said more ring-shaped structures along the ring-shaped path within said same ring-shaped structure, said same ring-shaped structure considered separately from each other structure of said more ring-shaped structures and said plurality of ring-shaped structures.

A "random component" is defined as a structural feature of one ring-shaped structure or of each of more ring-shaped structures that is nondeterministic.

A "structural feature" of one ring-shaped structure or of each of more ring-shaped structures is a feature of a respective ring-shaped structure distinguishing the respective ring-shaped structure from the surface comprising the respective ring-shaped structure outside the domain occupied by the respective ring-shaped structure. The structural feature preferably is selected from at least one of the group consisting of a dimension such as length along the circumference or a part of the circumference, width limited by the onset lines, height along the circumference or a part of the circumference, the surface power along the circumference or a part of the circumference and the surface mean power along the circumference or a part of the circumference.

The structural feature of one ring-shaped structure is "nondeterministic" if there is no rule to predict a variation of said structural feature along the circumference of said one ring-shaped structure knowing a variation of said structural feature along a part of the circumference of said one ring-shaped structure.

The structural feature of each of more ring-shaped structures is "nondeterministic" if there is no rule to predict a variation of said structural feature along the circumference of each same ring-shaped structure knowing a variation of said structural feature along a part of the circumference of each of said same ring-shaped structure.

The structural feature of more ring-shaped structures is "nondeterministic" if there is no rule to predict a variation of said structural feature along the circumference of a second ring-shaped structure of said more ring-shaped structures knowing a variation of a structural feature along the circumference of a first ring-shaped structure of said more ring-shaped structures.

The problem has been fully solved by the spectacle lens described before. Due to the random component(s) of the one ring-shaped structure or of each of the more ring-shaped structures, light directed through the portion of the spectacle lens comprising the one ring-shaped structure or each of the more ring-shaped structures provides both in-focus and out-of-focus light at a retina to provide a non-uniform defocus signal at the retina. Since an eye moves independent of the spectacle lens for viewing gazes of the eye, as the eye traverses across a portion of the spectacle lens comprising the one or more ring shaped structures, a magnitude of in-focus and out of focus light at a retinal plane varies to provide a dynamic and nonuniform blur signal at the retina. Due to the random component(s) of the one ring-shaped structure or of each of the more ring-shaped structures, light directed through the portion of the spectacle lens comprising the one ring-shaped structure or each of the more ring-shaped structures provides both in-focus and out-of-focus light at a retina to provide a non-uniform defocus signal at the retina irrespective of the direction of the gaze of the wearer of the spectacle lens. Due to the random component(s) of the one ring-shaped structure or of each of the more ring-shaped structures light directed through the portion of the spectacle lens comprising the one ring-shaped structure or each of the more ring-shaped structures provides both in-focus and out-of-focus light for a for a substantial portion of the viewing angles of the eye of the wearer of the spectacle lens. Due to the random component(s) of the one ring-shaped structure or of each of the more ring-shaped structures light directed through the portion of the spectacle lens comprising the one ring-shaped structure or each of the more ring-shaped structures provides both in-focus and out-of-focus light for viewing distances ranging from infinity to near from the eye of the wearer of the spectacle lens. Providing simultaneously both in-focus light and out-of-focus light as explained before is assumed to minimize an adaption or a habituation effect for a spectacle lens wearer.

Preferably, the spectacle lens comprises the plurality of ring-shaped structures, each ring-shaped structure having the uniform width, one ring-shaped structure or more ring-shaped structures of said plurality of ring-shaped structures each having the varying power, the spectacle lens is characterized in
- said plurality of ring-shaped structures being concentric ring-shaped structures, each of said concentric ring-shaped structures preferably comprising the optical centre or the fitting point of the spectacle lens or any other predetermined point on the spectacle lens, or
- said more ring-shaped structures being concentric ring-shaped structures, each of said concentric ring-shaped structures preferably comprising the optical centre or the fitting point of the spectacle lens or any other predetermined point on the spectacle lens, or
- each ring-shaped structure of said plurality of ring-shaped structures comprising the optical centre or the fitting point of the spectacle lens or any other predetermined point on the spectacle lens, or
- each ring-shaped structure of said more ring-shaped structures comprising the optical centre of the fitting point of the spectacle lens or any other predetermined point on the spectacle lens.

Said more ring-shaped structures being concentric ring-shaped structures preferably comprising the optical centre or the fitting point of the spectacle lens preferably means that said plurality of ring-shaped structures may comprise, preferably additionally to said more concentric ring-shaped structures, a ring-shaped structure or ring-shaped structures that is/are not centered on a same centre as said more concentric ring-shaped structures. The ring-shaped structures that are not centered on the same centre as said more concentric ring-shaped structures may be concentric or non-concentric, preferably the ring-shaped structures comprise the optical centre or the fitting point of the spectacle lens.

Each ring-shaped structure of said plurality of ring-shaped structures comprising the optical centre or the fitting point of the spectacle lens preferably means that each ring-shaped structure of said plurality of ring-shaped structures is distanced to each neighbouring ring-shaped structure such as to provide the structure-free domain of the spectacle lens adjacent to and along the inner onset line and the outer onset line of a same ring-shaped structure. "Distanced to a/each neighbouring ring-shaped structure" such as to provide the structure-free domain of the spectacle lens adjacent to and along the inner onset line and the outer onset line of a same ring-shaped structure preferably means that adjacent to and along the inner onset line of a first structure perpendicular to the circumferential direction of said first structure in any position of said inner onset line a distance to an outer onset line of a second structure is selected from the following minimum distances: a minimum distance of 0.2 mm, a minimum distance of 0.3 mm, a minimum distance of 0.4 mm, a minimum distance of 0.5 mm. Said minimum distance preferably is independent from the uniform widths of said plurality of ring-shaped structures.

Said plurality of ring-shaped structures preferably are non-concentric ring-shaped structures, each ring-shaped structure of said plurality of ring-shaped structures comprising the optical centre or the fitting point of the spectacle lens. Preferably, a centre of each same ring-shaped structure of said plurality of ring-shaped structures is randomly positioned, preferably on the surface of the spectacle lens comprising said more ring-shaped structures, such that each ring-shaped structure of said plurality of ring-shaped structures comprises the optical centre or the fitting point of the spectacle lens. A centre of each same ring-shaped structure of said plurality of ring-shaped structures is "randomly positioned" when there is no rule to predict a position of a centre of one ring-shaped structure from a position of a centre of another ring-shaped structure.

Each ring-shaped structure of said more ring-shaped structures comprising the optical centre or the fitting point of the spectacle lens preferably means that said more ring-shaped structures are distanced to each other such as to provide the structure-free domain of the spectacle lens adjacent to and along the inner onset line and the outer onset line of a same ring-shaped structure. Said more ring-shaped structures preferably are non-concentric ring-shaped structures, each ring-shaped structure of said more ring-shaped structures comprising the optical centre or the fitting point of the spectacle lens. Preferably, a centre of each same ring-shaped structure of said more ring-shaped structures is randomly positioned, preferably on the surface of the spectacle lens comprising said more ring-shaped structures, such that each ring-shaped structure of said more ring-shaped structures comprises the optical centre or the fitting point of the spectacle lens.

Said plurality of ring-shaped structures comprising said more ring-shaped structures, the centre of each ring-shaped structure of said more ring-shaped structures being randomly positioned to comprise the optical centre or the fitting point of the spectacle lens preferably means that said plurality of ring-shaped structures may comprise, preferably additionally to the before mentioned more ring-shaped structures, a ring-shaped structure or ring-shaped structures whose centre(s) is/are not randomly positioned. Preferably, said ring-shaped structure or said ring-shaped structures whose centre(s) is/are not randomly positioned are distanced to said more ring-shaped structures and preferably said ring-shaped structures are distanced to each other such as to provide the structure-free domain of the spectacle lens adjacent to and along the inner onset line and the outer onset line of any same ring-shaped structure.

Preferably, the spectacle lens comprises the plurality of ring-shaped structures, each ring-shaped structure having the uniform width, one ring-shaped structure or more ring-shaped structures of said plurality of ring-shaped structures each having the varying power, the spectacle lens is characterized in that said one ring-shaped structure is composed of n segments, n ≥ 2, or each of said more ring-shaped structures each is composed of n segments, n ≥ 2.

A number n of said n segments, n ≥ 2, is selected such that said n segments pieced together result in a same ring-shaped structure. A number n of said n segments, n ≥ 2, is selected such that preferably a sum of a length of said n segments is equal to a length of said one ring-shaped structure or a same ring-shaped structure of said more ring-shaped structures. A "length of a same ring-shaped structure" is a length of said same ring-shaped structure determined along its circumferential direction. A "length of a segment" from a start of a segment i, i = 1 to n, to an end of said segment i is defined as a length along the circumferential direction of said one ring-shaped structure or a same ring-shaped structure of said more ring-shaped structures. The surface mean power along the circumferential direction of each segment of said n segments is constant, i.e., the variation of the surface mean power is zero, i.e., 0 D, at least along 50% of the length of a same segment. The variation of the surface mean power being "zero" at least along 50% of the length of the same segment preferably includes a variation below a threshold of at least one threshold selected from the group consisting of: a threshold of 0.06 D, 0.09 D, 0.12 D. Preferably, the variation of the surface mean power is zero at least along the central 50% of the length of a same segment. The start of a segment i+1 is the end of the segment i which in turn is a center point between a point where the surface mean power of said segment i starts to deviate from its constant surface mean power along the circumferential direction and a point where the surface mean power of said segment i+1 begins to stay at its constant surface mean power along the circumferential direction. For i = n, segment n+1 is segment 1.

The start and/or the end of the segment i, i = 1 to n, of a same ring-shaped structure of said more ring-shaped structures is not displaced to the start and/or the end of the segment i', i' = 1 to n or i' = 1 to n', of another same ring-shaped structure of said more ring-shaped structures when there is a line from the common point of said more ring-shaped structures through both a) the start of the segment i and the start of the segment i' and/or b) the end of the segment i and the end of the segment i'.

The start and/or the end of the segment i, i = 1 to n, of a same ring-shaped structure of said more ring-shaped structures is displaced to the start and/or the end of the segment i', i' = 1 to n or i' = 1 to n', of another same ring-shaped structure of said more ring-shaped structures when there is no line from the common point of said more ring-shaped structures through both a) the start of the segment i and the start of the segment i' and/or b) the end of the segment i and the end of the segment i'.

In adjacent segments i, i+1, i = 1 to n, of a same ring-shaped structure the surface mean power is different to each other at least along the 50% of the length of each segment of said adjacent segments where the variation of the surface mean power is zero. For i = n, segment n+1 is segment 1.

For example, in case of cylindrical segments having a step between each adjacent cylindrical segments of said n segments of a same ring-shaped structure, the surface mean power within each of said n segments is constant along the circumferential direction and constant along any direction perpendicular to the circumferential direction. Preferably, the surface mean power of adjacent cylindrical segments separated by a step is different.

For example, in case of cylindrical segments having a smooth transition between each adjacent cylindrical segments of said n segments of a same ring-shaped structure, the surface mean power within each of said n segments is constant along the circumferential direction and constant along any direction perpendicular to the circumferential direction at least along 50% of the length of said same cylindrical segment.

For example, in case of cylindrical segments having a random transition between each adjacent cylindrical segments of said n segments of a same ring-shaped structure, the surface mean power within each of said n segments is constant along the circumferential direction and constant along any direction perpendicular to the circumferential direction at least along 50% of the length of said same cylindrical segment. A transition between adjacent cylindrical segments is random when there is no rule to predict a transition between adjacent cylindrical segments from a known transition between other adjacent cylindrical segments.

Preferably, the length of the segment i, i = 1 to n, of a same ring-shaped structure is within a range limited by a predetermined minimal length of said segment i and by the number n and the length of said same ring-shaped structure. The predetermined minimal length of said segment i preferably is selected from one of the following lengths: 0.1 mm, 0.2 mm, 0.25 mm, 0.3 mm.

Preferably, the length of the segment i, i = 1 to n, of a same ring-shaped structure is smaller than at least one of 90%, 80%, 70%, 60%, each of the length of said same ring-shaped structure.

For example, the length of the segment i, i = 1 to n, is within one of the following ranges:
- the length being within a range of from 0.2 mm to 140 mm,
- the length being within a range of from 0.25 mm to 120 mm,
- the length being within a range of from 0.3 mm to 100 mm,
- the length being within a range of from 0.35 mm to 80 mm.

Preferably, the smooth transition or the random transition is 50% or less of the length of the segment.

Preferably, the spectacle lens comprises the plurality of ring-shaped structures, each ring-shaped structure having the uniform width, one ring-shaped structure or more ring-shaped structures of said plurality of ring-shaped structures each having the varying power, and the spectacle lens is characterized in that said one ring-shaped structure is composed of n segments, n ≥ 2, or each of said more ring-shaped structures each is composed of n segments, n ≥ 2, and said one random component being that the number n of said n segments is same or different for each of said more ring-shaped structures.

In case the number n of said n segments is same for each of said more ring-shaped structures, the sum of the length of said n segments is equal to the length of a same ring-shaped structure of said more ring-shaped structures, and preferably at least one of the following applies:
- the length of at least one segment i, i = 1 to n, of said n segments in a same ring-shaped structure of said more ring-shaped structures is different to the length of at least one segment i', i' = 1 to n, i' ≠ i, of another ring-shaped structure of said more ring-shaped structures, the length of said at least one segment i preferably being a random length, i.e. there is no rule to predict the length of said at least one segment i in knowledge of the length of any other segment h, h ≠ i, of said same ring-shaped structure;
- the length of each segment i, i = 1 to n, of said n segments in a same ring-shaped structure of said more ring-shaped structures is different to the length of each segment i', i' = 1 to n, i' ≠ i, of another same ring-shaped structure of said more ring-shaped structures, the length of each segment i preferably being a random length, i.e. there is no rule to predict the length of each segment i;
- the start of the segment i, i = 1 to n, of said n segments in a same ring-shaped structure of said more ring-shaped structures is randomly displaced along the circumferential direction to the start of another segment i', i' = 1 to n, of another same ring-shaped structure of said more ring-shaped structures, and/or the end of the segment i, i = 1 to n, of said n segments in a same ring-shaped structure of said more ring-shaped structures is randomly displaced along the circumferential direction to the end of another segment i', i' = 1 to n, of another same ring-shaped structure of said more ring-shaped structures. The start and/or the end of the segment i, i = 1 to n, of a same ring-shaped structure of said more ring-shaped structures is randomly displaced to the start and/or the end of the segment i', i' = 1 to n, of another same ring-shaped structure of said more ring-shaped structures when i) there is no line from the common point surrounded or encircled by said more ring-shaped structures towards a periphery of the spectacle lens through both a) the start of the segment i and the start of the segment i' and/or b) the end of the segment i and the end of the segment i' and when ii) there is no rule to predict the start of the segment i' in knowledge of the start of the segment i and/or there is no rule to predict the end of the segment i' in knowledge of the end of the segment i;
- the start of the segment i, i = 1 to n, of said n segments in a same ring-shaped structure of said more ring-shaped structures is randomly displaced along the circumferential direction to the start of each other segment i', i", i'", ..., i' = 1 to n, i" = 1 to n, i‴ = 1 to n, ..., of mutually different ring-shaped structures of said more ring-shaped structures, and/or the end of the segment i, i = 1 to n, of said n segments in a same ring-shaped of said more ring-shaped structures is randomly displaced along the circumferential direction to the end of each other segment i', i", i'", ..., i' = 1 to n, i" = 1 to n, i‴ = 1 to n, ..., of mutually different ring-shaped structures of said more ring-shaped structures. The start and/or the end of the segment i, i = 1 to n, of a same ring-shaped structure of said more ring-shaped structures is randomly displaced to the start and/or the end of each other segment i', i", i'", ..., i' = 1 to n, i" = 1 to n, i‴ = 1 to n, ..., of mutually different ring-shaped structures of said more ring-shaped structures when i) there is no line from the common point surrounded or encircled by said more ring-shaped structures towards the periphery of the spectacle lens through both a) the start of the segment i and the start of each segment i', i", i'", ... and/or b) the end of the segment i and the end of each segment i' i", i'", ... and when ii) there is no rule to predict the start of each segment i', i", i'", ... in knowledge of the start of the segment i and/or there is no rule to predict the end of each segment i', i", i'", ... in knowledge of the end of the segment i;
- the surface mean power of at least two segments i₁ and i₂, (i₁, i₂) = 1 to n, i₁ ≠ i₂, of said n segments in a same ring-shaped structure of said more ring-shaped structures is different to at least one of
   - the surface mean power of at least one other segment is, is = 1 to n, i₁ ≠ is ≠ i₂, of said same ring-shaped structure, preferably the surface mean power of at least one of said segments i₁, i₂, is is a random surface mean power, i.e., there is no rule to predict the surface mean power of at least one of said segments i₁, i₂, is in knowledge of the surface mean power of any other segment h, h ≠ i₁, h ≠ i₂, h ≠ is, of said same ring-shaped structure,
   - the surface mean power of at least one of segments i₁' and i₂', (i₁', i₂') = 1 to n, i₁' ≠ i₂' of said n segments in at least one other same ring-shaped structure of said more ring-shaped structures, preferably the surface mean power of at least one of said segments i₁, i₂, i₁', i₂' is a random surface mean power, i.e., there is no rule to predict the surface mean power of at least one of said segments i₁, i₂, i₁', i₂' in knowledge of the surface mean power of any other segment h of said same ring-shaped structure or in knowledge of the surface mean power of any other segment h', h' ≠ i₁, h' ≠ i₂, h' ≠ i₁', h' ≠ i₂', of said at least one other same ring-shaped structure,
   - the surface mean power of at least one of segments i₁' and i₂', (i₁', i₂')' = 1 to n, i₁' ≠ i₂', of said n segments in each other same ring-shaped structure of said more ring-shaped structures, preferably the surface mean power of at least one of said segments i₁, i₂, i₁', i₂' is a random surface mean power, i.e., there is no rule to predict the surface mean power of at least one of said segments i₁, i₂, i₁', i₂' in knowledge of the surface mean power of any other segment h of said same ring-shaped structure or in knowledge of the surface mean power of any other segment h', h' ≠ i₁, h' ≠ i₂, h' ≠ i₁', h' ≠ i₂', of each of said other same ring-shaped structures;
- the surface mean power of at least one segment i, i = 1 to n, of said n segments in a same ring-shaped structure of said more ring-shaped structures is equal to the surface mean power of at least one segment i', i' = 1 to n, of said n segments of another same ring-shaped structure of said more ring-shaped structures, the start of said at least one segment i being randomly displaced along the circumferential direction to the start of said at least one segment i' and/or the end of said at least one segment i being randomly displaced along the circumferential direction to the end of said at least one segment i', randomly displaced with respect to the start and/or the end of segments i and i' as defined above;
- the surface mean power of at least one segment i, i = 1 to n, of said n segments in a same ring-shaped structure of said more ring-shaped structures is equal to the surface mean power of at least one segment i', i", i'", ..., i' = 1 to n, i" = 1 to n, i‴ = 1 to n, ..., of said n segments of each other same ring-shaped structure of said more ring-shaped structures, the start of said at least one segment i being randomly displaced along the circumferential direction to the start of said at least one segment i', i", i‴ and/or the end of said at least one segment i being randomly displaced along the circumferential direction to the end of said at least one segment i', i", i'", randomly displaced with respect to the start and/or the end of segments i, i', i", i‴ as defined above;
- the surface mean power of at least one segment i, i = 1 to n, of said n segments in a same ring-shaped structure of said more ring-shaped structures is different to the surface mean power of at least one segment i', i' = 1 to n, of said n segments of another same ring-shaped structure of said more ring-shaped structures, the start of said at least one segment i being randomly displaced along the circumferential direction to the start of said at least one segment i' and/or the end of said at least one segment i being randomly displaced along the circumferential direction to the end of said at least one segment i', randomly displaced with respect to the start and/or the end of segment i and i' as defined above;
- the surface mean power of at least one segment i, i = 1 to n, of said n segments in a same ring-shaped structure of said more ring-shaped structures is different to the surface mean power of at least one segment i', i", i'", ..., i' = 1 to n, i" = 1 to n, i‴ = 1 to n, ..., of said n segments of each other same ring-shaped structure of said more ring-shaped structures, the start of said at least one segment i being randomly displaced along the circumferential direction to the start of each of said at least one segments i', i", i'", ..., and/or the end of said at least one segment i being randomly displaced along the circumferential direction to the end of each of said at least one segments i', i", i'", ..., randomly displaced with respect to the start and/or the end of segments i, i', i", i‴ as defined above.

In case the number n of said n segments is different for each of said more ring-shaped structures, the sum of the length of said n segments is equal to the length of a same ring-shaped structure of said more ring-shaped structures, and preferably at least one of the following applies:
- the length of each segment i, i = 1 to n, of said n segments is equal in one same ring-shaped structure of said more ring-shaped structures and said length is equal to the length of each segment i', i' = 1 to n', of another same ring-shaped structure, the length preferably being a random length. The random length of one segment i, i = 1 to n, and predefining said random length being equal for each segment i, i = 1 to n, in the same ring-shaped structure and predefining the number n thus determines the circumference of said same ring-shaped structure. When, for example, said one same ring-shaped structure and said other same ring-shaped structure are neighbouring ring-shaped structures both comprising the optical centre or the fitting point of the spectacle lens, optionally both having a same centre, said one same ring-shaped structure and said other same ring-shaped structure are distanced to each other by the structure-free domain of the spectacle lens between the outer onset line of said one same ring-shaped structure and the inner onset line of said other same ring-shaped structure, or vice versa, i.e., the inner onset line of said one same ring-shaped structure and the outer onset line of said other same ring-shaped structure, the respective inner and outer onset lines determined by the length of the same ring-shaped structure and the uniform width of the respective same ring-shaped structure. Preferably, the length of each segment i is determined such as to have the structure-free zone of the spectacle lens between neighbouring ring-shaped structures;
- the length of each segment i, i = 1 to n, of said n segments is equal in each same ring-shaped structure of said more ring-shaped structures, the length preferably being a random length. Preferably, the length of the segments i are determined such as to have the structure-free domain of the spectacle lens between neighbouring ring-shaped structures. The length of the segments i may be determined such that neighbouring ring-shaped structures are distanced to each other equidistantly or not equidistantly;
- the surface mean power of one segment i, i = 1 to n, is repeated in at least one segment j, j ≠ i, the segment j not adjacent to segment i, of a same ring-shaped structure of said more ring-shaped structures, the surface mean power of said one segment preferably being a random surface mean power;
- the surface mean power of one segment i, i = 1 to n, is repeated in at least one segment j, j ≠ i, the segment j not adjacent to segment i, of a same ring-shaped structure of said more ring-shaped structures, the surface mean power of said one segment preferably being a random surface mean power, the surface mean power of one segment i', i' = 1 to n', of another same ring-shaped structure is equal to the surface mean power of said one segment i, the surface mean power of said segment i' is repeated in a segment j', j' ≠ i', the segment j' not adjacent to segment i', of said other same ring-shaped structure, the start of said one segment i being randomly displaced to the start of said one segment i' and/or the end of said one segment i being randomly displaced to the end of said one segment i'. The start and/or the end of the segment i, i = 1 to n, of a same ring-shaped structure of said more ring-shaped structures is randomly displaced to the start and/or the end of the segment i', i' = 1 to n', of another same ring-shaped structure of said more ring-shaped structures when i) there is no line from the common point surrounded or encircled by said more ring-shaped structures towards the periphery of the spectacle lens through both a) the start of the segment i and the start of the segment i' and/or b) the end of the segment i and the end of the segment i' and when ii) there is no rule to predict the start of the segment i' in knowledge of the start of the segment i and/or there is no rule to predict the end of the segment i' in knowledge of the end of the segment i;
- the surface mean power of one segment i, i = 1 to n, is repeated in at least one segment j, j ≠ i, the segment j not adjacent to segment i, of a same ring-shaped structure of said more ring-shaped structures, the surface mean power of said one segment preferably being a random surface mean power, the surface mean power of one segment i', i", i'", ..., i' = 1 to n', i" = 1 to n', i‴ = 1 to n', of each other same ring-shaped structure is equal to the surface mean power of said one segment i, the surface mean power of said segments i', i", i'", ..., is repeated in a segment j', j", j'", ..., j' ≠ i', the segment j' not adjacent to segment i', j" ≠ i", the segment j" not adjacent to segment i", j‴ ≠ i'", the segment j‴ not adjacent to segment i'", and so on, of each of said other same ring-shaped structure, the start of said one segment i being randomly displaced to the start of each of said segments i', i", i'", ... and/or the end of said one segment i being randomly displaced to the end of each of said segments i', i", i'", .... The start and/or the end of the segment i, i = 1 to n, of a same ring-shaped structure of said more ring-shaped structures is randomly displaced to the start and/or the end of each other segment i', i", i'", ..., i' = 1 to n', i" = 1 to n', i‴ = 1 to n', ..., of mutually different ring-shaped structures of said more ring-shaped structures when i) there is no line from the common point surrounded or encircled by said more ring-shaped structures towards the periphery of the spectacle lens through both a) the start of the segment i and the start of each segment i', i", i'", ... and/or b) the end of the segment i and the end of each segment i' i", i'", ... and when ii) there is no rule to predict the start of each segment i', i", i'", ... in knowledge of the start of the segment i and/or there is no rule to predict the end of each segment i', i", i'", ... in knowledge of the end of the segment i.

The number n of said n segments being same or different for each of said more ring-shaped structures, the sum of the length of said n segments is equal to the length of the same ring-shaped structure of said more ring-shaped structures, preferably applies when said plurality of ring-shaped structures comprises said more ring-shaped structures and one of the following applies:
- said plurality of ring-shaped structures are concentric ring-shaped structures comprising the optical centre or the fitting point of the spectacle lens,
- said more ring-shaped structures are concentric ring-shaped structures comprising the optical centre or the fitting point of the spectacle lens,
- each ring-shaped structure of said plurality of ring-shaped structures comprising the optical centre or the fitting point of the spectacle lens,
- each ring-shaped structure of said more ring-shaped structures comprising the optical centre or the fitting point of the spectacle lens.

Preferably, the spectacle lens comprises the plurality of ring-shaped structures, each ring-shaped structure having the uniform width, one ring-shaped structure or more ring-shaped structures of said plurality of ring-shaped structures each having the varying power, the spectacle lens is characterized in that said one ring-shaped structure is composed of n segments, n ≥ 2, or each of said more ring-shaped structures each is composed of n segments, n ≥ 2, and said one random component being that each of said n segments is having a random surface mean power.

A segment i of said n segments of said one ring-shaped structure, i = 1 to n, is having a "random surface mean power" when there is no rule to predict the surface mean power of any other segment j, j ≠ i, of said one ring-shaped structure in knowledge of the surface mean power of said segment i. Alternatively or additionally, a segment i of said n segments of one ring-shaped structure, i = 1 to n, is having a "random surface mean power" when there is no rule to predict the surface mean power of said segment i in knowledge of the surface mean power of any other segment h, h ≠ i, of said one ring-shaped structure.

Accordingly, a segment i of said n segments of each same ring-shaped structure of said more ring-shaped structures, i = i to n, is having a "random surface mean power" when there is no rule to predict the surface mean power of any other segment j, j ≠ i, of a same ring-shaped structure in knowledge of the surface mean power of said segment i or when there is no rule to predict the surface mean power of any other segment i', i", i'", ..., i' = 1 to n', i" = 1 to n", i‴ = 1 to n'", of any or each other ring-shaped structure of said more ring-shaped structures in knowledge of the surface mean power of said segment i. Alternatively or additionally, a segment i of said n segments of each same ring-shaped structure of said more ring-shaped structures, i = i to n, is having a "random surface mean power" when there is no rule to predict the surface mean power of said segment i in knowledge of the surface mean power of any other segment h, h ≠ i, of the same ring-shaped structure or when there is no rule to predict the surface mean power of said segment i in knowledge of the surface mean power of any other segment h', h", h'", ..., h' ≠ i, h"≠ i, h‴ ≠ i, and so on, of any or each other ring-shaped structure of said more ring-shaped structures.

Preferably, a) the random surface mean power of a segment i, i = 1 to n, of one ring-shaped structure or b) the random surface mean power of a segment i, i = 1 to n, of each same ring-shaped structure of said more ring-shaped structures each is within one of the following ranges:
- the random surface mean power is within a range of from 0.2 D to 15 D,
- the random surface mean power is within a range of from 0.3 D to 14 D,
- the random surface mean power is within a range of from 0.4 D to 13 D,
- the random surface mean power is within a range of from 0.5 D to 12 D,
- the random surface mean power is within a range of from 1 D to 11 D,
- the random surface mean power is within a range of from 1.5 D to 10 D.

The random surface mean power, preferably selected from one of the before mentioned ranges, may be in a same range for each segment i, i = 1 to n, of at least two ring-shaped structures or each ring-shaped structure of said more ring-shaped structures. The random surface mean power, preferably selected from one of the before mentioned ranges, may be in different ranges for each segment i, i = 1 to n, of at least two ring-shaped structures or each ring-shaped structure of said more ring-shaped structures.

In case each of said more ring-shaped structures each is composed of n segments, n ≥ 2, n may be same or different for at least two ring-shaped structures of said more ring-shaped structures.

Each of said n segments having a random surface mean power in each of said more ring-shaped structures being composed of n segments, n ≥ 2, the sum of the length of said n segments is equal to the length of the same ring-shaped structure of said more ring-shaped structures, preferably applies when said plurality of ring-shaped structures comprises said more ring-shaped structures and one of the following applies:
- said plurality of ring-shaped structures are concentric ring-shaped structures comprising the optical centre or the fitting point of the spectacle lens,
- said more ring-shaped structures are concentric ring-shaped structures comprising the optical centre or the fitting point of the spectacle lens,
- each ring-shaped structure of said plurality of ring-shaped structures comprising the optical centre or the fitting point of the spectacle lens,
- each ring-shaped structure of said more ring-shaped structures comprising the optical centre or the fitting point of the spectacle lens.

Reference is made to the paragraphs above describing ring-shaped structures with segments of random surface mean power.

Preferably, the spectacle lens comprises the plurality of ring-shaped structures, each ring-shaped structure having the uniform width, one ring-shaped structure or more ring-shaped structures of said plurality of ring-shaped structures each having the varying power, the spectacle lens is characterized in that said one ring-shaped structure is composed of n segments, n ≥ 2, or each of said more ring-shaped structures each is composed of n segments, n ≥ 2, and said one random component being that each of said n segments is of random length.

A segment i of said n segments of said one ring-shaped structure, i = 1 to n, is of "random length" when there is no rule to predict the length of any other segment j, j ≠ i, of said one ring-shaped structure in knowledge of the length of said segment i. Alternatively or additionally, a segment i of n segments of one ring-shaped structure, i = 1 to n, is of "random length" when there is not rule to predict the length of said segment i in knowledge of the length of any other segment h, h ≠ i, of said one ring-shaped structure.

Accordingly, a segment i of said n segments of each same ring-shaped structure of said more ring-shaped structures, i = i to n, is of "random length" when there is no rule to predict the length of any other segment j, j ≠ i, of a same ring-shaped structure in knowledge of the length of said segment i or when there is no rule to predict the length of any other segment i', i", i'", ..., i' = 1 to n', i" = 1 to n", i‴ = 1 to n'", of any or each other ring-shaped structure of said more ring-shaped structures in knowledge of the length of said segment i. Alternatively or additionally, a segment i of said n segments of each same ring-shaped structure of said more ring-shaped structures, i = i to n, is of "random length" when there is no rule to predict the length of said segment i in knowledge of the length of any other segment h, h ≠ i, of the same ring-shaped structure or when there is no rule to predict the length of said segment i in knowledge of the length of any other segment h', h", h'", ..., h' ≠ i, h"≠ i, h‴ ≠ i, and so on, of any or each other ring-shaped structure of said more ring-shaped structures.

In case each of said more ring-shaped structures each is composed of n segments, n ≥ 2, n may be same or different for at least two ring-shaped structures of said more ring-shaped structures.

Each of said n segments being of random length in each of said more ring-shaped structures being composed of n segments, n ≥ 2, the sum of the length of said n segments is equal to the length of the same ring-shaped structure of said more ring-shaped structures, preferably applies when said plurality of ring-shaped structures comprises said more ring-shaped structures and one of the following applies:
- said plurality of ring-shaped structures are concentric ring-shaped structures comprising the optical centre or the fitting point of the spectacle lens,
- said more ring-shaped structures are concentric ring-shaped structures comprising the optical centre or the fitting point of the spectacle lens,
- each ring-shaped structure of said plurality of ring-shaped structures comprising the optical centre or the fitting point of the spectacle lens,
- each ring-shaped structure of said more ring-shaped structures comprising the optical centre or the fitting point of the spectacle lens.

Reference is made to the paragraphs above describing ring-shaped structures with segments of random length.

Preferably, the spectacle lens comprises the plurality of ring-shaped structures, each ring-shaped structure having the uniform width, one ring-shaped structure or more ring-shaped structures of said plurality of ring-shaped structures each having the varying power, the spectacle lens is characterized in that each of said more ring-shaped structures each is composed of n segments, n ≥ 2, and in that said one random component being at least one of
a) a start of a segment of said n segments of a ring-shaped structure of said more ring-shaped structures is randomly displaced along a circumferential direction to a start of at least one other segment of n' segments of at least one other ring-shaped structure of said more ring-shaped structures,
b) an end of a segment of said n segments of a ring-shaped structure of said more ring-shaped structures is randomly displaced along a circumferential direction to an end of at least one other segment of n' segments of at least one other ring-shaped structure of said more ring-shaped structures.

In case each of said more ring-shaped structures each is composed of n segments, n ≥ 2, n may be same or different for at least two ring-shaped structures of said more ring-shaped structures.

The start and/ or the end of a segment i, i = 1 to n, of a ring-shaped structure being randomly displaced to a segment i', i' = 1 to n or i' = 1 to n', of another ring-shaped structure of said more ring-shaped structures preferably applies when said plurality of ring-shaped structures comprises said more ring-shaped structures and one of the following applies:
- said plurality of ring-shaped structures are concentric ring-shaped structures comprising the optical centre or the fitting point of the spectacle lens,
- said more ring-shaped structures are concentric ring-shaped structures comprising the optical centre or the fitting point of the spectacle lens,
- each ring-shaped structure of said plurality of ring-shaped structures comprising the optical centre or the fitting point of the spectacle lens,
- each ring-shaped structure of said more ring-shaped structures comprising the optical centre or the fitting point of the spectacle lens.

Reference is made to the paragraphs above describing ring-shaped structures with segments whose start and/or end is/are randomly displaced.

Preferably, the spectacle lens comprises the plurality of ring-shaped structures, each ring-shaped structure having the uniform width, one ring-shaped structure or more ring-shaped structures of said plurality of ring-shaped structures each having the varying power, the spectacle lens is characterized in that said one ring-shaped structure is composed of n segments, n ≥ 2, or each of said more ring-shaped structures each is composed of n segments, n ≥ 2, and in said one random component being that each transition between adjacent segments of said n segments is a random transition.

A transition between adjacent segments is a "random transition" when there is no rule to predict a transition of any other adjacent segments of said one ring-shaped structure in knowledge of the transition between said adjacent segments. Alternatively or additionally, a transition between adjacent segments is a "random transition" when there is no rule to predict said transition between said adjacent segments in knowledge of a transition between other adjacent segments of one ring-shaped structure.

Accordingly, a transition between adjacent segments of each same ring-shaped structure of said more ring-shaped structures, is a "random transition" when there is no rule to predict the transition of any other adjacent segments of a same ring-shaped structure in knowledge of the transition of said adjacent segments or when there is no rule to predict the transition of any other adjacent segments of any or each other ring-shaped structure of said more ring-shaped structures in knowledge of the transition of said adjacent segments. Alternatively or additionally, a transition between adjacent segments of each same ring-shaped structure of said more ring-shaped structures, is a "random transition" when there is no rule to predict said transition between said adjacent segments in knowledge of a transition between adjacent segments of said same ring-shaped structure or when there is no rule to predict said transition between said adjacent segments in knowledge of a transition between adjacent segments of any or each other ring-shaped structure of said more ring-shaped structures.

The transition between adjacent segments preferably is selected from at least one of the group consisting of a step, a sigmoid transition and any other smooth transition.

In case each of said more ring-shaped structures each is composed of n segments, n ≥ 2, n may be same or different for at least two ring-shaped structures of said more ring-shaped structures.

Each transition between adjacent segments being random preferably applies when said plurality of ring-shaped structures comprises said more ring-shaped structures and one of the following applies:
- said plurality of ring-shaped structures are concentric ring-shaped structures comprising the optical centre or the fitting point of the spectacle lens,
- said more ring-shaped structures are concentric ring-shaped structures comprising the optical centre or the fitting point of the spectacle lens,
- each ring-shaped structure of said plurality of ring-shaped structures comprising the optical centre or the fitting point of the spectacle lens,
- each ring-shaped structure of said more ring-shaped structures comprising the optical centre or the fitting point of the spectacle lens.

Reference is made to the paragraphs above describing transitions.

Preferably, the spectacle lens comprises the plurality of ring-shaped structures, each ring-shaped structure having the uniform width, one ring-shaped structure or more ring-shaped structures of said plurality of ring-shaped structures each having the varying power, the spectacle lens is characterized in that each of said more ring-shaped structures each is composed of n segments, n ≥ 2, and said one random component being that said uniform width is a random uniform width for at least two ring-shaped structures of said more ring-shaped structures.

At least two ring-shaped structures of said more ring-shaped structures are of "random uniform width" when there is no rule to predict the uniform width of at least a second ring-shaped structure in knowledge of the uniform width of at least a first ring-shaped structure of said more ring-shaped structures.

Preferably, the uniform width of one ring-shaped structure or of each ring-shaped structure of said more ring-shaped structures is within one of the following ranges selected from:
- a range of from 0.1 mm to 8 mm,
- a range of from 0.2 mm to 7 mm,
- a range of from 0.3 mm to 6 mm,
- a range of from 0.4 mm to 5 mm.

In case each of said more ring-shaped structures each is composed of n segments, n ≥ 2, n may be same or different for at least two ring-shaped structures of said more ring-shaped structures.

At least two ring-shaped structures of said more ring-shaped structures having the random uniform width preferably applies when said plurality of ring-shaped structures comprises said more ring-shaped structures and one of the following applies:
- said plurality of ring-shaped structures are concentric ring-shaped structures comprising the optical centre or the fitting point of the spectacle lens,
- said more ring-shaped structures are concentric ring-shaped structures comprising the optical centre or the fitting point of the spectacle lens,
- each ring-shaped structure of said plurality of ring-shaped structures comprising the optical centre or the fitting point of the spectacle lens,
- each ring-shaped structure of said more ring-shaped structures comprising the optical centre or the fitting point of the spectacle lens.

Preferably, the spectacle lens comprises the plurality of ring-shaped structures, each ring-shaped structure having the uniform width, one ring-shaped structure or more ring-shaped structures of said plurality of ring-shaped structures each having the varying power, the spectacle lens is characterized in that said one ring-shaped structure is composed of n segments, n ≥ 2, or each of said more ring-shaped structures each is composed of n segments, n ≥ 2, and that a number of k different surface mean powers of each of said n segments is repeated along the circumferential direction of a same ring-shaped structure, said number n of said n segments is a multiple of said number k of different surface mean powers, and said one random component is selected from at least one of
i) the random length of each segment n of a same ring-shaped structure,
ii) the start of a segment of said n segments of a ring-shaped structure of said more ring-shaped structures is randomly displaced along the circumferential direction to the start of at least one other segment of n' segments of at least one other ring-shaped structure of said more ring-shaped structures,
iii) the end of a segment of said n segments of a ring-shaped structure of said more ring-shaped structures is randomly displaced along a circumferential direction to the end of at least one other segment of n' segments of at least one other ring-shaped structure of said more ring-shaped structures.

A number of k different surface mean powers of each of said n segments being repeated along the circumferential direction of the same ring-shaped structure, said number n of said n segments being a multiple of said number k of different surface mean powers, preferably includes at least one of
- a surface mean power k of a segment i, i = 1 to n, is repeated in at least a segment j, j ≠ i, segment j not adjacent to segment i, along the circumferential direction of a same ring-shaped structure,
- a surface mean power k of a segment i, i = 1 to n, of a ring-shaped structure is repeated in at least a segment i', i' = 1 to n' of at least one other ring-shaped structure of said more ring-shaped structures,
- a surface mean power k of a segment i, i = 1 to n, of a ring-shaped structure is repeated in at least a segment i', i", i'", ..., i' =1 to n', i" = 1 to n", i‴ = 1 to n'", ..., of each other ring-shaped structure of said more ring-shaped structures,
- a sequence of different surface mean powers k, k+1, ..., of adjacent segments i, i+1, ..., i = 1 to n, is repeated along the circumferential direction of a same ring-shaped structure, for i = n, segment n+1 is segment 1,
- a sequence of different surface mean powers k, k+1, ... of adjacent segments i, i+1, ..., i = 1 to n, is repeated in at least one other ring-shaped structure of said more ring-shaped structures, for i = n, segment n+1 is segment 1,
- a sequence of different surface mean powers k, k+1, ... of adjacent segments i, i+1, ..., i = 1 to n, is repeated in each other ring-shaped structure of said more ring-shaped structures, for i = n, segment n+1 is segment 1.

In case only the sequence of k different surface mean powers of adjacent segments is repeated along the circumferential direction of the same ring-shaped structure, preferably the number n of said n segments is dividable by the k different surface mean powers.

For example, in case the number k of different surface powers is two, the different surface mean powers are alternating along the circumferential direction of a same ring-shaped structure and the number n of segments i, i = 1 to n, of said same ring-shaped structure is even.

Analogously, for example, in case a sequence of m different lengths of adjacent segments is repeated along the circumferential direction of the same ring-shaped structure, preferably the number n of said n segments is dividable by the m different length. If, for example, the number m of different lengths is two, the different lengths are alternating along the circumferential direction of a same ring-shaped structure and the number n of segments i, i = 1 to n, of said same ring-shaped structure is even.

In case each of said more ring-shaped structures each is composed of n segments, n ≥ 2, n may be same or different for at least two ring-shaped structures of said more ring-shaped structures.

A number of k different surface mean powers of each of said n segments repeated along the circumferential direction of the same ring-shaped structure, said number n of said n segments being the multiple of said number k of different surface mean powers, and said one random component being selected as mentioned before preferably applies when said plurality of ring-shaped structures comprises said more ring-shaped structures and one of the following applies:
- said plurality of ring-shaped structures are concentric ring-shaped structures comprising the optical centre or the fitting point of the spectacle lens,
- said more ring-shaped structures are concentric ring-shaped structures comprising the optical centre or the fitting point of the spectacle lens,
- each ring-shaped structure of said plurality of ring-shaped structures comprising the optical centre or the fitting point of the spectacle lens,
- each ring-shaped structure of said more ring-shaped structures comprising the optical centre or the fitting point of the spectacle lens.

The data set comprises at least one kind of the following kinds of data:
(i) a digital representation of the spectacle lens as described before, the digital representation being for the purpose of a use for a manufacture of the spectacle lens as described before,
(ii) data containing computer-readable instructions for controlling one or more manufacturing machines in order to produce the spectacle lens as described before.

A "digital representation" of the spectacle lens as described before is a mathematical description of the surface of the spectacle lens comprising and inclusive of the plurality of ring-shaped structures. Said mathematical description may be alternatively a piecewise mathematical description for the surface of the spectacle lens comprising said plurality of ring-shaped structures and for each ring-shaped structure of said plurality of ring-shaped structures.

The digital representation of the spectacle lens is configured for the purpose of a use for a manufacture of the spectacle lens as described before.

The digital representation of the spectacle lens is "configured" for the purpose of a use for a manufacture of the spectacle lens when, for example, said digital representation is used for manufacturing a respective casting surface of a mold, said mold being used for casting, i.e., manufacturing, said spectacle lens or for casting a semi-finished spectacle lens blank as defined in ISO 13666:2019(E), entry 3.8.1, that is used for manufacturing said spectacle lens.

The method being configured for calculating by a computer a digital twin of a spectacle lens for the purpose of a use of the digital twin for a manufacture of the spectacle lens, the spectacle lens comprising a plurality of ring-shaped structures, each ring-shaped structure having a uniform width, one ring-shaped structure or more ring-shaped structures of said plurality of ring-shaped structures each having a varying power, the method is characterized in
- determining i) one random component or more random components for one structural feature or more structural features of said one ring-shaped structure or ii) one random component or more random components for one structural feature or more structural features of each of said more ring-shaped structures.

A "digital twin of a spectacle lens" is a mathematical description of a front surface of said spectacle lens, a mathematical description of a back surface of said spectacle lens, and a mathematical description of a refractive index distribution of an optical material of said spectacle lens. The digital twin of the spectacle lens is for the purpose of a use for a manufacture of the spectacle lens. The mathematical descriptions include an orientation of the front surface to the back surface. Therefore, preferably, either the front surface and the back surface are described in a same coordinate system or a transformation between a coordinate system of the front surface to a coordinate system of the back surface, or vice versa, is known. The mathematical descriptions preferably are closed mathematical descriptions. The mathematical descriptions can be discretized into x,y,z positions, for example, the discrete x,y positions may be defined according to an arbitrarily selected pattern. Preferably, said discrete x,y,z positions on or of at least one of the front surface and the back surface are comprised in said digital twin of said spectacle lens.

Said one random component preferably is determined via a random function, said more random components preferably are determined via random functions. Said random function(s) preferably is/are selected from at least one of the group consisting of a random function for a variation of a surface mean power, a random function for a variation of a uniform width of at least two ring-shaped structures of said more ring-shaped structures, a random function for a variation of a length of a segment i of a ring-shaped structure composed of n segments, i = 1 to n, and a random function for a displacement of a segment i of a ring-shaped structure composed of n segments, i = 1 to n, with respect to a segment i' of another ring-shaped structure composed of n' segments, i' = 1 to n', i ≠ i' of at least two mutually different ring-shaped structures of said more ring-shaped structures.

A "random function for a variation of a surface mean power" is defined as a mathematical function with
i) input value being a position along a ring-shaped path within said one ring-shaped structure or along a ring-shaped path within a same ring-shaped structure of each of said more ring-shaped structures,
ii) output value being the surface mean power at said position and
iii) a random functional relationship between said input value and said output value.

A "position along a ring-shaped path" is a point at a distance along said ring-shaped path measured from a predefined origin of said ring-shaped path. A "predefined origin" of a ring-shaped path is an intersection point of said ring-shaped path with an arbitrarily selected predefined reference line starting from the common point to the periphery of the spectacle lens. Said arbitrarily selected predefined reference line has an intersection point with each ring-shaped path within any ring-shaped structure of the spectacle lens.

A "random functional relationship" between said input value and said output value is a functional relationship that comprises at least one random parameter. A "random parameter" is determined by a predefined probability distribution, for example a normal distribution with a predefined mean and a predefined standard deviation. An example for a random functional relationship is a function f(x-r) where x is the position along the ring-shaped path and r is the random parameter. Said function f(x-r) can be a periodic function switching between at least two predefined surface mean power values P₁ and P₂. Another example for a random functional relationship is a periodic function f(x) where x is the position along the ring-shaped path and r is the random parameter switching between at least two random surface mean power values P₁ and P₂ where P₁ is determined by a normal distribution with mean P₁₀ and variance σ₁ and where P₂ is determined by a normal distribution with mean P₂₀ and variance σ₂.

A "random function for a variation of a uniform width" is a predefined probability distribution, for example a normal distribution with a predefined mean and a predefined standard deviation. For example, the uniform width of each ring-shaped structure of said more ring-shaped structures is determined by a normal distribution with mean w₀ and standard deviation σ_{w}.

A "random function for a variation of a length of a segment i of a ring-shaped structure" is a predefined probability distribution, for example a normal distribution with a predefined mean and a predefined standard deviation, defining the length of said segment i. For example, the length of each segment i is determined by a normal distribution with mean I₀ and standard deviation σ_{I}.

A "random function for a variation of a displacement of a segment i of a ring-shaped structure" is a predefined probability distribution, for example a normal distribution with a predefined mean and a predefined standard deviation, defining the position of the start and/or the end of the segment i along the ring-shaped path within said ring-shaped structure.

Preferably, a data processing system comprising a processor and a storage medium coupled to the processor, wherein the processor is adapted to perform the step: determining i) one random component or more random components for one structural feature or more structural features of said one ring-shaped structure or ii) one random component or more random components for one structural feature or more structural features of each of said more ring-shaped structures based on a computer program stored on a storage medium.

The computer program comprises instructions which, when the program is executed by a computer, cause the computer to carry out the method described before.

Preferably, the computer program is stored on a non-transitory tangible computer-readable storage medium, the computer program comprises instructions which, when the program is executed by a computer, cause the computer to carry out the method described before.

The computer-readable storage medium having stored thereon the computer program.

Preferably, the computer-readable storage medium is a non-tangible computer-readable storage medium.

The data signal carries the computer program.

The method described before is further configured to manufacture a spectacle lens based on the digital twin of the spectacle lens calculated according to said method.

Figure 1 is a plan view of a spectacle lens 101 comprising three ring-shaped structures 102, 103 and 104 each with a variation in surface mean power along a ring-shaped path within each of said three ring-shaped structures.

In figure 1 the structure-free domain of the innermost ring-shaped structure 102 comprises the common point and carries the surface power of the surface of the spectacle lens comprising the three ring-shaped structure. Each of the ring-shaped structures 102, 103, 104 are of uniform width composed of segments (light and dark colored segments). Each of the segments of the ring-shaped structure is of random length, the start and/or the end of each of the segments of the innermost ring-shaped structure is randomly displaced to the start and/or the end of each of the segments of the two other ring-shaped structures and the transition between adjacent segments is random (not shown).

Figure 2 is a plan view of a spectacle lens 201 comprising two ring-shaped structures 202 and 203 each with a variation in surface mean power along a ring-shaped path within each of said two ring-shaped structures. Each of the ring-shaped structures 202 and 203 are of uniform width and composed of segments with varying surface power.

Figure 2, side view of the spectacle lens 201, illustrates the path of light passing through the spectacle lens 201 with the two ring-shaped structures 202 and 203 resulting in in-focus and out-of-focus light at the retina. The structure-free domain 204 of the innermost ring-shaped structure 202 has a surface power such that as illustrated light rays passing through focus at the retina 204a of an eye. Light rays passing through the light-colored segment of the ring-shaped structure 202 come to a focus in front of the retina at 202a and continue thereafter to form a blurred region on the retina. Similarly, the light and dark segments of the ring-shaped structure 203 come to a focus in front of the retina at varying distances from the retina 203a and 203b and continue thereafter to form a blurred region on the retina. Light rays passing through the structure-free domains of the spectacle lens form a focus on the retina. Therefore, at the retina 205, light rays are both in focus and out of focus.

Figure 3 is a plan view of 16 ring-shaped structures with a variation in surface mean power along a ring-shaped path within each ring-shaped structure for a spectacle lens, the 16 ring-shaped structures are to be placed concentric to the optical centre of the spectacle lens. The structure-free domain 304 of the innermost ring-shaped structure 303 shall comprise the optical centre of the spectacle lens. Each of the 16 ring-shaped structures are of different length and each of the ring-shaped structures are of uniform width. Each of the ring-shaped structure, illustrated in example 303 is comprised of segments that are of random length and have a random surface mean power. The transition between segments is random. The start and/or the end of the light and dark colored segments in neighbouring ring-shaped structures is/are randomly displaced.

## Claims

1. Spectacle lens comprising a plurality of ring-shaped structures, each ring-shaped structure having a uniform width, one ring-shaped structure or more ring-shaped structures of said plurality of ring-shaped structures each having a varying power,
**characterized in that**
a variation of a surface mean power comprises one random component or more random components, said variation being along a ring-shaped path within said one ring-shaped structure or along a ring-shaped path within a same ring-shaped structure of each of said more ring-shaped structures.

2. Spectacle lens according to claim 1, **characterized in that** said one ring-shaped structure is composed of n segments, n ≥ 2, or each of said more ring-shaped structures each is composed of n segments, n ≥ 2.

3. Spectacle lens according to claim 2, **characterized in that** said one random component being that a number n of said n segments is same or different for each of said more ring-shaped structures.

4. Spectacle lens according to any one of the preceding claims 2 to 3, **characterized in that** said one random component being that each of said n segments has a random surface mean power.

5. Spectacle lens according to any one of the preceding claims 2 to 4, **characterized in that** said one random component being that each of said n segments is of random length.

6. Spectacle lens according to any one of the preceding claims 2 to 5, **characterized in that** said one random component being selected from at least one of
a) a start of a segment of said n segments of a ring-shaped structure of said more ring-shaped structures is randomly displaced along a circumferential direction to a start of at least one other segment of n' segments of at least one other ring-shaped structure of said more ring-shaped structures,
b) an end of a segment of said n segments of a ring-shaped structure of said more ring-shaped structures is randomly displaced along a circumferential direction to an end of at least one other segment of n' segments of at least one other ring-shaped structure of said more ring-shaped structures.

7. Spectacle lens according to any one of the preceding claims 2 to 6, **characterized in that** said one random component being that each transition between adjacent segments of said n segments is a random transition.

8. Spectacle lens according to any one of the preceding claims 2 to 7, **characterized in that** said one random component being that said uniform width is a random uniform width for at least two ring-shaped structures of said more ring-shaped structures.

9. Spectacle lens according to any one of the preceding claims 2 to 8, **characterized in that** a number of k different surface mean powers of each of said n segments is repeated along the circumferential direction of a same ring-shaped structure, said number n of said n segments is a multiple of said number k of different surface mean powers, and said one random component is selected from at least one of
i) the random length of each segment n of a same ring-shaped structure,
ii) the start of a segment of said n segments of a ring-shaped structure of said more ring-shaped structures is randomly displaced along the circumferential direction to the start of at least one other segment of n' segments of at least one other ring-shaped structure of said more ring-shaped structures,
iii) the end of a segment of said n segments of a ring-shaped structure of said more ring-shaped structures is randomly displaced along a circumferential direction to the end of at least one other segment of n' segments of at least one other ring-shaped structure of said more ring-shaped structures.

10. Data set comprising at least one kind of the following kinds of data:
(i) a digital representation of the spectacle lens as claimed in any one of the claims 1 to 9, the digital representation being for the purpose of a use for a manufacture of the spectacle lens as claimed in any one of the claims 1 to 9,
(ii) data containing computer-readable instructions for controlling one or more manufacturing machines in order to produce the spectacle lens as claimed in any of the claims 1 to 9.

11. Method being configured for calculating by a computer a digital twin of a spectacle lens for the purpose of a use of the digital twin for a manufacture of the spectacle lens, the spectacle lens comprising a plurality of ring-shaped structures, each ring-shaped structure having a uniform width, one ring-shaped structure or more ring-shaped structures of said plurality of ring-shaped structures each having a varying power, the method being **characterized in**
- determining i) one random component or more random components for one structural feature or more structural features of said one ring-shaped structure or ii) one random component or more random components for one structural feature or more structural features of each of said more ring-shaped structures.

12. Computer program comprising instructions which, when the program is executed by a computer, cause the computer to carry out the method of claim 11.

13. Computer-readable storage medium having stored thereon the computer program of claim 12.

14. Data signal carrying the computer program of claim 12.

15. Method according to claim 11 being further configured to manufacture a spectacle lens based on the digital twin of the spectacle lens calculated according to claim 11.
